# EUROPÄISCHE PATENTANMELDUNG

(11) **EP 2 615 319 A2**
(43) Veröffentlichungstag der Anmeldung: **17.07.2013**
(21) Anmeldenummer: 13150609.9
(22) Anmeldetag: 09.01.2013
(51) Int. Cl.: F16C 19/16

(54) **Wälzlager**

(30) Priorität: 12.01.2012 DE 102012200376
(71) Anmelder: Aktiebolaget SKF, 41550 Göteborg (SE)
(72) Erfinder: Schweitzer, Ferdinand, 3352 St. Peter in der Au (AT); Essl, Christoph, 4407 Dietach (AT)
(74) Vertreter: Schonecke, Mitja

(57) **Zusammenfassung**

Die Erfindung betrifft ein Wälzlager (1) zur Übertragung radialer und axialer Kräfte, das einen Innenring (2) und einen Außenring (3) aufweist, zwischen denen Wälzkörper (4) angeordnet sind, wobei die Lagerringe (2, 3) Stirnseiten (5, 6, 7, 8) zur axialen Anlage an einem angrenzenden Bauteil aufweisen. Um auf eine Abstimmung der axialen Anlageflächen bei bestimmten Anwendungen verzichten zu können, sieht die Erfindung vor, dass im spielfreien Zustand des Wälzlagers (1) in einem axialen Endbereich des Wälzlagers (1) die Stirnseite (5) des einen Lagerrings (2) gegenüber der Stirnseite (6) des anderen Lagerrings (3) in axialer Richtung (a) einen vorgegebenen Überstand (x) aufweist, wobei der Überstand (x) zwischen 0 µm und 5 µm beträgt.

## Beschreibung

Die Erfindung betrifft ein Wälzlager zur Übertragung radialer und axialer Kräfte, das einen Innenring und einen Außenring aufweist, zwischen denen Wälzkörper angeordnet sind, wobei die Lagerringe Stirnseiten zur axialen Anlage an einem angrenzenden Bauteil aufweisen.

In vielen Anwendungen werden gattungsgemäße Wälzlager eingesetzt, beispielsweise bei der Lagerung von Rotoren in Schraubenkompressoren und Pumpen. Hierbei ist es sehr wichtig, die axiale Position einer Welle relativ zu einem Gehäuse und gegebenenfalls zu einer weiteren Welle genau festzulegen, was die Voraussetzung für einen ordnungsgemäßen Betrieb und einen guten Wirkungsgrad der Anlage ist.

Die genaue axiale Lage einer zu lagernden Welle relativ zu einem Gehäuse kann gegebenenfalls durch Einpassen der Bauteile hergestellt werden, was allerdings einen hohen (Montage)Aufwand verursacht. Hierfür werden häufig zwei Wälzlager aufeinander abgestimmt, was allerdings den Nachteil hat, dass die beiden abgestimmten Lager zusammengehörig gehandhabt werden müssen, was einen entsprechenden logistischen Aufwand bedingt.

Der Erfindung liegt die **Aufgabe** zugrunde, ein Wälzlager der eingangs genannten Art so weiterzubilden, dass ein universell mit einem anderen Lager paarbares Lager geschaffen wird, mit dem in einfacher Weise ein präziser Einbau einer Welle in einem Gehäuse ohne hohen Montageaufwand ermöglicht wird. Hiermit soll insbesondere für Schraubenkompressoren und Pumpen eine einfach handhabbare Lagerung zur Verfügung gestellt werden, die in einfacher Weise montiert werden kann.

Die **Lösung** dieser Aufgabe durch die Erfindung ist dadurch gekennzeichnet, dass im spielfreien Zustand des Wälzlagers in einem axialen Endbereich des Wälzlagers die Stirnseite des einen Lagerrings gegenüber der Stirnseite des anderen Lagerrings in axialer Richtung einen vorgegebenen Überstand aufweist, wobei der Überstand zwischen 0 µm und 5 µm beträgt. Bevorzugt liegt der Überstand zwischen 0,1 µm und 3 µm, besonders bevorzugt zwischen 0,2 µm und 2 µm.

Bevorzugt ist es die Stirnseite des Innenrings, die über die Stirnseite des Außenrings axial übersteht.

Das Wälzlager ist bevorzugt ein Schrägkugellager, ein Rillenkugellager oder ein Kegelrollenlager.

Der Überstand liegt bevorzug dann vor, wenn zwischen dem Innenring und dem Außenring eine axial wirkende Vorspannkraft vorliegt. Diese liegt bevorzugt zwischen 10 und 200 N, besonders bevorzugt zwischen 40 und 60 N.

Die Stirnseiten der Lagerringe, die den mit Überstand angeordneten Stirnseiten gegenüberliegen, sind bevorzugt in radialer Richtung nicht fluchtend angeordnet.

Mit der vorgeschlagenen Ausgestaltung eines Wälzlagers ist ein universell mit einem anderen Lager dieser Art paarbares Lager entstanden, mit dem in einfacher und schneller Weise eine Welle in einem Gehäuse axial exakt montiert werden kann.

Durch den genannten axialen Überstand in einem axialen Endbereich des Lagers sind praktisch genau fluchtende Planflächen bzw. Stirnseiten garantiert, so dass insoweit eine definierte Bezugsfläche für die Montage des Lagers bereitgestellt ist. Diese (Stirn)Seite des Lagers mit den fluchtenden Planflächen dient als Anlagefläche (Vorzugsanlagefläche) zum Aufbau der Lageranordnung.

Die exakte Definition des Überstands erfolgt so, dass eine definierte Messlast als axiale Vorspannlast auf das Lager aufgegeben wird (beispielsweise 50 N). Unter dieser Last ergibt sich dann der axiale Überstand in der genannten Größenordnung, der bevorzugt in einem Bereich zwischen 0 µm und 2 µm liegt.

Der Erfindungsvorschlag kommt bevorzugt bei Schraubenkompressoren und Pumpen zum Einsatz, wo eine Welle hinsichtlich ihrer axialen Position exakt in einem Gehäuse und relativ zu einer anderen Welle zu lagern ist, um einen hohen Wirkungsgrad und eine einwandfreie Funktion des Kompressors bzw. der Pumpe zu gewährleisten.

Mit der vorgeschlagenen Ausgestaltung wird - infolge der definiert fluchtenden Stirnseiten des Lagers - ein zusätzliches Abstimmen der axialen Position bei der Montage entbehrlich. Die genaue axiale Lage ergibt sich durch den Montagevorgang des vorgeschlagenen Wälzlagers selber.

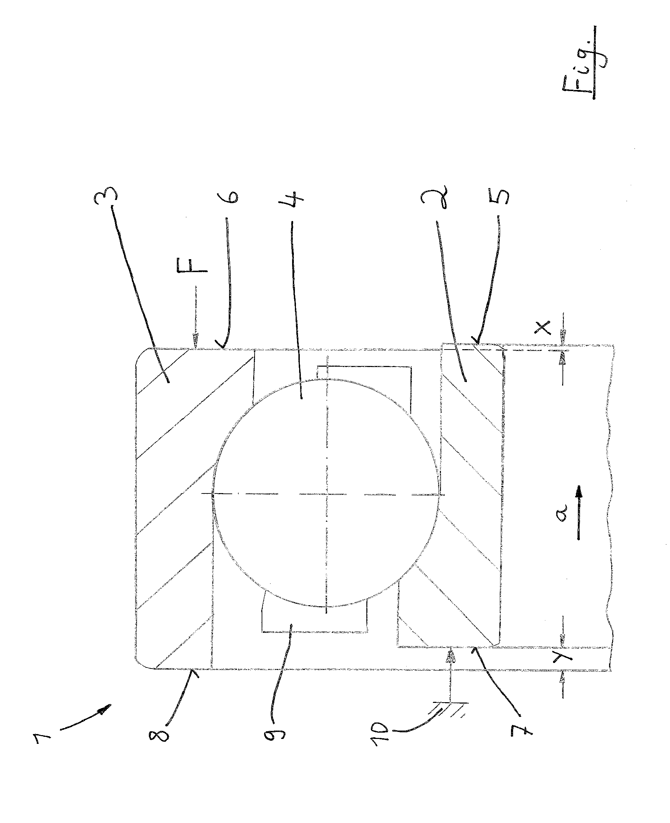

In der Zeichnung ist ein Ausführungsbeispiel der Erfindung dargestellt. Die einzige Figur zeigt den Radialschnitt durch ein Wälzlager in Form eines Schrägkugellagers, das mit der erfindungsgemäßen Ausgestaltung versehen ist.

In der Figur ist ein Schrägkugellager 1 zu sehen, das einen Innenring 2 und einen Außenring 3 aufweist, zwischen denen Wälzkörper 4 in Form von Kugeln angeordnet sind. Ein Käfig 9 führt die Kugeln 4 in bekannter Weise.

Der Innenring 2 hat eine (rechte) Stirnseite 5, der Außenring 3 hat ebenfalls eine (rechte) Stirnseite 6. Im anderen axialen Endbereich des Lagers 1 (links) haben der Innenring 2 bzw. der Außenring 3 entsprechende Stirnseiten 7 bzw. 8.

Wesentlich ist, dass die Stirnseiten 5 und 6 an vorzugsweise nur dieser (rechten) Seite des Lagers 1 fluchten, und zwar in der Weise, dass im spielfreien Zustand des Wälzlagers 1 in diesem axialen Endbereich des Wälzlagers 1 die Stirnseite 5 des Innenrings 2 gegenüber der Stirnseite 6 des Außenrings 3 in axialer Richtung a einen vorgegebenen Überstand x aufweist. Dieser Überstand x beträgt zwischen 0 µm und 5 µm; er ist in der Figur stark übertrieben dargestellt.

Im anderen axialen Endbereich des Lagers 1 (links) ist indes bevorzugt vorgesehen, dass ein Versatz y in axialer Richtung a (ggf. von mehreren Millimetern) zwischen den beiden Stirnseiten 7 und 8 vorliegt.

Die genaue Definition des Überstands x wird dadurch gegeben, dass der axiale Abstand der beiden Stirnseiten 5 und 6 gemessen wird, wenn das Lager 1 in spielfreiem Zustand ist.

Hierzu kann der eine Lagerring 2 an einem axialen Anschlag 10 angelegt werden, so dass dieser Lagerring definiert axial festliegt. Dann wird eine Vorspannkraft F auf den anderen Lagerring 3 aufgebracht, die beispielsweise 50 N beträgt. Nunmehr kann der Überstand x gemessen werden, der zwischen 0 µm und maximal µm betragen soll, vorzugsweise zwischen 0,1 µm und 3 µm.

### Bezugszeichenliste

- 1: Wälzlager
- 2: Innenring
- 3: Außenring
- 4: Wälzkörper
- 5: Stirnseite
- 6: Stirnseite
- 7: Stirnseite
- 8: Stirnseite
- 9: Käfig
- 10: Anschlag

- a: axiale Richtung
- x: Überstand
- y: Versatz
- F: Vorspannkraft

## Patentansprüche

1. Wälzlager (1) zur Übertragung radialer und axialer Kräfte, das einen Innenring (2) und einen Außenring (3) aufweist, zwischen denen Wälzkörper (4) angeordnet sind, wobei die Lagerringe (2, 3) Stirnseiten (5, 6, 7, 8) zur axialen Anlage an einem angrenzenden Bauteil aufweisen,
**dadurch gekennzeichnet, dass**
im spielfreien Zustand des Wälzlagers (1) in einem axialen Endbereich des Wälzlagers (1) die Stirnseite (5) des einen Lagerrings (2) gegenüber der Stirnseite (6) des anderen Lagerrings (3) in axialer Richtung (a) einen vorgegebenen Überstand (x) aufweist, wobei der Überstand (x) zwischen 0 µm und 5 µm beträgt.

2. Wälzlager nach Anspruch 1, **dadurch gekennzeichnet, dass** der Überstand (x) zwischen 0,1 µm und 3 µm, vorzugsweise zwischen 0,2 µm und 2 µm, beträgt.

3. Wälzlager nach Anspruch 1 oder 2, **dadurch gekennzeichnet, dass** die Stirnseite (5) des Innenrings (2) über die Stirnseite (6) des Außenrings (3) axial übersteht.

4. Wälzlager nach einem der Ansprüche 1 bis 3, **dadurch gekennzeichnet, dass** das Wälzlager ein Schrägkugellager ist.

5. Wälzlager nach einem der Ansprüche 1 bis 3, **dadurch gekennzeichnet, dass** das Wälzlager ein Rillenkugellager ist.

6. Wälzlager nach einem der Ansprüche 1 bis 3, **dadurch gekennzeichnet, dass** das Wälzlager ein Kegelrollenlager ist.

7. Wälzlager nach einem der Ansprüche 1 bis 6, **dadurch gekennzeichnet, dass** der Überstand (x) vorliegt, wenn zwischen dem Innenring (2) und dem Außenring (3) eine axial wirkende Vorspannkraft (F) vorliegt.

8. Wälzlager nach Anspruch 7, **dadurch gekennzeichnet, dass** die axial wirkende Vorspannkraft (F) zwischen 10 und 200 N beträgt.

9. Wälzlager nach Anspruch 8, **dadurch gekennzeichnet, dass** die axial wirkende Vorspannkraft (F) zwischen 40 und 60 N beträgt.

10. Wälzlager nach einem der Ansprüche 1 bis 9, **dadurch gekennzeichnet, dass** die Stirnseiten (7, 8) der Lagerringe (2, 3), die den mit Überstand (x) angeordneten Stirnseiten (5, 6) gegenüberliegen, in radialer Richtung nicht fluchtend (y) angeordnet sind.
